# EUROPEAN PATENT APPLICATION

(11) **EP 2 540 481 A1**
(43) Date of publication of application: **02.01.2013**
(21) Application number: 11171447.3
(22) Date of filing: 27.06.2011
(51) Int. Cl.: B29C 70/56, B29C 70/52, A61C 13/30

(54) **A fiber reinforced composite**

(71) Applicant: Stick Tech OY, 20521 Turku (FI)
(72) Inventor: Lassila, Lippo, 21630 Lielax (FI); Vallittu, Pekka, 21620 Kuusisto (FI); Keulemans, Filip, 9140 Temse (BE)
(74) Representative: Suominen, Kaisa Liisa

(57) **Abstract**

The invention relates to a fiber reinforced composite comprising at least one fiber having a lenght and a diameter, and a matrix embedding said at least one fiber and obtainable by curing a matrix precursor, the composite being obtainable by a method wherein the at least one fiber is submitted to a force in at least one direction during curing of said matrix precursor, said force being at least 1 N/mm² of the diameter of the at least one fiber. The invention also relates to uses of such composites.

## Description

### FIELD OF THE INVENTION

The present invention relates to a fiber reinforced composite comprising at least one fiber having a lenght and a diameter, and a matrix embedding said at least one fiber and obtainable by curing a matrix precursor. The present invention also relates to a method for manufacturing said composite as well as to various uses of the composite.

### BACKGROUND OF THE INVENTION

Fiber reinforced composites are known and used in medical and dental applications. Typically the fibers and the matrix material are selected to be suitable for the intended medical or dental use, which as such limits the options for materials. However, in many uses an improved strenght of the composite would be advantageous.

Document US 2008/0145820 presents one way of improving the strength of fiber reinforced composites by preheating a tooth restoration precursor of a defined shape or anatomy in a temperature range from about 65-120 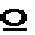 C for a length of time for the temperature to reach a temperature equilibrium. Thereafter, the dental composition is light cured to polymerise the dental restoration. The restoration produced through this process is said to have at least 10 % or higher strength than the dental restorations made by conventional methods.

Documents EP 432 001 and US 5,328,372 describe root pins for a dental prostheses comprising carbon fibers and an epoxy or polyester matrix. The amount of fibers in the root pin is quite high, from 40 to 80 volume-%. The fibers can be submitted to a light tension during the manufacture of the root pins. These documents are however silent about the intensity of such tension and moreover, only give examples with carbon fibers.

There exists however still a need to further improve the strenght of the composite.

### OBJECTS AND SUMMARY OF THE INVENTION

An object of the present invention is to provide a fiber reinforced composite, comprising (a) fiber(s) and a matrix, that has better strength properties as the previously known composites.

It is also an object of the present invention to provide a composite that contains also beneficial fillers, such as radio opacity inducing particles or therapeutically active agents in particle form, while still achieving improved strenght properties.

Another object of the invention is to obtain a fiber composite having a strenght that is at least 10 %, preferably at least 20 % higher than the strength of a composite consisting of the same materials but without the pretensioning.

The present invention relates to a fiber reinforced composite that typically comprises
- at least one fiber having a lenght and a diameter, said fiber being different from carbon fiber, and
- a matrix embedding said at least one fiber and obtainable by curing a matrix precursor,
the composite being obtainable by a method wherein the at least one fiber is submitted to a force in at least one direction during curing of said matrix precursor, said force being at least 1 N/mm² of the diameter of the at least one fiber.

### DEFINITIONS

The terms used in this application, if not otherwise defined, are those agreed on at the consensus conference on biomaterials in 1987 and 1992, see Williams, DF (ed.): Definitions in biomaterials: Proceedings of a consensus conference of the European Society for Biomaterials, Chester, England. March 3-5, 1986. Elsevier, Amsterdam 1987, and Williams DF, Black J, Doherty PJ. Second consensus conference on definitions in biomaterials. In: Doherty PJ, Williams RL, Williams DF, Lee AJ (eds). Biomaterial-Tissue Interfaces. Amsterdam: Elsevier, 1992.

In this application, by bioactive material is meant a material that has been designed to elicit or modulate biological activity. Bioactive material is often surface-active material that is able to chemically bond with the mammalian tissues.

By biomaterial is meant a material intended to interface with biological systems to evaluate, treat, augment or replace any tissue, organ or function of the body. By biocompatibility is meant the ability of a material used in a medical device to perform safely and adequately by causing an appropriate host response in a specific location. By composite is meant a material comprising at least two different constituents, for example a polymer and a ceramic material, such as glass.

In the present context the term medical devices means any instrument, apparatus, implement, machine, appliance, implant, material or other similar or related article, intended by the manufacturer to be used, alone or in combination, for human beings for one or more of the specific purposes of treatment or alleviation of disease; treatment, alleviation of or compensation for an injury; replacement, modification or support of the anatomy or of a physiological process. More specifically, the term medical devices comprises implants, which are meant to comprise any kind of implant used within the body, as well as devices used for supporting, replacing and remodelling tissue or bone and support for tissue and bone healing or regeneration.

An implant according to the present context comprises any kind of implant used for surgical musculoskeletal applications such as screws, plates, pins, tacks or nails for the fixation of bone fractures and/or osteotomies to immobilise the bone fragments for healing; suture anchors, tacks, screws, bolts, nails, clamps, stents and other devices for soft tissue-to-bone, soft tissue-into-bone and soft tissue-to-soft tissue fixation; as well as devices used for supporting tissue or bone healing or regeneration; or cervical wedges and lumbar cages and plates and screws for vertebral fusion and other operations in spinal surgery.

The volume percentages given are percentages of the total volume of the cured composite, although it is estimated that the volume ratios do not essentially change during curing.

### BRIEF DESCRIPTION OF THE DRAWING

Figure 1 schematically presents a method for manufacturing a pretensioned composite according to the present invention.
Figures 2a and 2b schematically present a method for manufacturing a round pre-tensioned fiber reinforced composite.
Figure 3 schematically presents a method for manufacturing a unidirectionally pretensioned composite according to the present invention.
Figure 4 schematically presents a method for manufacturing a bidirectionally pretensioned composite according to the present invention.
Figure 5 present results of Example 1.
Figure 6 presents results of Example 2.
Figure 7 presents results of Example 2.
Figure 8 presents results of Example 2.
Figure 9 presents results of Example 3.
Figure 10 schematically presents an embodiment of the present invention.
Figure 11 schematically presents another embodiment of the present invention.

### DETAILED DESCRIPTION OF THE INVENTION

The present invention relates to a fiber reinforced composite that typically comprises
- at least one fiber having a lenght and a diameter, said fiber being different from carbon fiber, and
- a matrix embedding said at least one fiber and obtainable by curing a matrix precursor,
the composite being obtainable by a method wherein the at least one fiber is submitted to a force in at least one direction during curing of said matrix precursor, said force being at least 1 N/mm² of the diameter of the at least one fiber.

The present invention thus provides a fiber reinforced composite, comprising (a) fiber(s) and a matrix, that has better strength properties as the previously known composites, as will be shown in the Experimental part. These enhanced strenght properties are believed to be obtained by the defined tension applied to the fiber(s) during the manufacturing process of the composite. Indeed, as the fibers are submitted to a force, such as a tension, during the curing of the matrix precursor, they retain this tension once the composite is finished.

Samples of the composite according to the present invention have even been tested by immersing them in water for one month and measuring their strenght thereafter. It was found that the immersion in water for one month did not have any effect on the strenght of the composite, thus indicating that the obtained material is also stable.

The force used in the manufacturing is measured per square unit (in mm²) of the diameter of the fiber. The strength is typically applied in the direction of the length of the fiber, be the fiber in straight or wound state. The fibers can also be in the form of a mat (with fibers in different directions) wherein a tension (force) is applied in one or more of the directions of the fibers.

The force is at least 1 N/mm² of the diameter of the at least one fiber. The force may also be at least 5, 10, 15, 20, 25, 30, 35, 40, 45, 50, 55, 60 N/mm² of the diameter of the fiber(s) or even higher, depending on the nature of the fibers used. According to an embodiment of the invention, the force is at least 10 N/mm². According to another embodiment of the invention, the force is at least 20 N/mm².

The fiber composite according to the present invention can comprise for example 2-65 volume-% of fibers. The amount of fibers in the composite can be for example from 2, 3, 4, 5, 10, 15, 20, 25, 30, 35, 40, 45, 50, 55 or 60 volume-% up to 3, 4, 5, 10, 15, 20, 25, 30, 35, 40, 45, 50, 55, 60 or 65 volume-% of the composite. One preferred range is 2-35 volume-%.

The fibers may be selected from a group consisting of inert glass fibers, bioactive glass fibers, aramid fibers, poly(p-phenylene-2,6-benzobisoxazole) fibers (PBO), poly(2,6-diimidazo(4,5-b4',5'-e)pyridinylene-1,4(2,5-dihydro)phenylene fibers (PIPD), polyolefin fibers such as polyethene or polypropene fibers, sol-gel processed silica fibers collagen, cellulose and modified cellulose fibers. Any combination of said fibers may be used.

The fibers can be surface treated to enhance their bonding to the surrounding matrix. The method of surface treatment as well as the surface treating agents used vary depending on the fiber. The fibers can be functionalised with e.g. hydroxyapatite, silane, titanate, zirconate or aluminate. When polymer fibers are used, they can be surface treated by grafting, for example (plasma treatment etc).

The diameter of the fiber or fibers used in the present invention may vary from 0.1 µm up to 100 µm. The diameter can thus be for example from 0.1, 0.2, 0.3, 0.4, 0.5, 1.0, 1.5, 2.0, 2.5, 3.0, 4.0, 5.0, 10, 15, 20, 25, 30, 35, 40, 45, 50, 55, 60, 65, 70, 75, 80, 85, 90 or 95 µm up to 0.2, 0.3, 0.4, 0.5, 1.0, 1.5, 2.0, 2.5, 3.0, 4.0, 5.0, 10, 15, 20, 25, 30, 35, 40, 45, 50, 55, 60, 65, 70, 75, 80, 85, 90, 95 or 100 µm. Some preferred ranges are for example 1-30 µm and 10-25 µm. The diameter of the fibers may also vary within a fibre bundle, for example. It is also possible to use a combination of two different fibers with varying diameters, the smaller diameter fibers filling the voids between the larger diameter fibers.

The composite may contain only one fiber or two or more fibers. The fibers can be in the form of a bundle or a mat (woven or nonwoven, for example). The bundle can comprise several individual fibers or it may comprise several smaller bundles of fibers. The bundles may be twisted or straigth. Only part of the fibers or all fibers can be submitted to the pretensioning.

The matrix precursor used can be for example a momoner mixture comprising a solvent or a mixture of monomers without solvent.

The matrix of the composite can form for example 20-98 volume-% of the composite. The portion of matrix of the final composite can be for example from 20, 25, 30, 35, 40, 45, 50, 55, 60, 65, 70, 75, 80, 85, 90 or 95 volume-% up to 25, 30, 35, 40, 45, 50, 55, 60, 65, 70, 75, 80, 85, 90, 95 or 98 volume-% of the composite.

The matrix precursor may comprise monomers selected from the group consisting of methyl methacrylate, ethyl methacrylate, n-butyl methacrylate, isobutyl methacrylate, 2-ethylhexyl methacrylate, cyclohexyl methacrylate, isobornyl methacrylate, tetrahydrofurfuryl methacrylate, benzyl methacrylate, morpholinoethyl methacrylate, diethylene glycol dimethacrylate, triethylene glycol dimethacrylate (TEGDMA), diurethane dimethacrylate, 2,2-bis(4-(2-hydroxy-3-methacryloxy)phenyl)propane (BisGMA), methacrylate functionalized dendrimers, other methacrylated hyperbranched oligomers and mixtures thereof. The matrix may also be made of epoxy resins or rigid rod polymers such as poly(paraphenylene) based rigid rod polymers, epoxy resins being however not the preferred matrix materials.

The matrix may further be made of crosslinkable monomers or polymers such as ε-caprolactone, polycaprolactone, polylactides, polyhydroxyproline, and other biopolymers as well as polyamides, polyurethane, polyethylene, polypropylene, other polyolefins and polyvinyl chloride (PVC). The matrix may naturally also consist of a mixture of a monomer(s) and a polymer(s).

According to an embodiment of the invention, the composite further comprises filler particules, also called particulate filler. The filler particles can prevent shrinkage of the composite after the tension is released, thus improving its shape stability and enhancing its strenght properties by contributing to the maintenance of the tension of the fiber. For example, typically radio opaque particles weaken the composite by taking up space from the strenthening fibers. In this invention, this weakening is however compensated by the pretensioning of the fibers while the particles can in turn enhance the strenght properties.

By particles, it is meant also for example spheres and short fibers (where the lenght of the fiber is at most three times its diameter). The filler particles can be either bioactive or inert, such as bioactive glass, other additives, such as silicon (Si), calcium (Ca), phosphorus (P), barium (Ba), magnesium (Mg), potassium (K), sodium (Na) or titanium (Ti) oxides or fluorine (F) or other compounds of said elements, colour pigments, inert ceramics, hydroxyapatite or other calcium phosphates, xerogels, functionally bioactive or therapeutically active substances, growth factors, antigens, antibiotics, disinfectants, radio opaque materials, bone morphogenic proteins (BMPs), interferons, corticosteroids, biphosphonates, cytostatics, anabolic hormones, vitamins, anti-inflammatory agents, antimicrobiotics and combinations and mixtures thereof.

The particulate filler can form 0-80 volume-% of the composite. The portion of the filler of the final composite can be for example from 0, 5, 10, 15, 20, 25, 30, 35, 40, 45, 50, 55, 60, 65, 70 or 75 volume-% up to 5, 10, 15, 20, 25, 30, 35, 40, 45, 50, 55, 60, 65, 70, 75 or 80 volume-% of the composite.

The diameter of the filler particles (this being the largest diameter in case of irrecular particles) may vary for example from 10 nm to 50 µm. The diameter can be for example from 10 nm, 50 nm, 100 nm, 500 nm, 1 µm, 5 µm, 10 µm, 25 µm or 40 µm up to 50 nm, 100 nm, 500 nm, 1 µm, 5 µm, 10 µm, 25 µm, 40 µm or 50 µm. Some preferred ranges are 100 nm - 40 µm.

Typically, when the amount of fillers is increased, the amount of fibers is decreased. The filler particles can be added for example into the matrix precursor.

The present invention also relates to a method for manufacturing a fiber reinforced composite, said composite comprising at least one fiber having a lenght and a diameter, provided that the fiber is different from carbon fiber, wherein
- the at least one fiber is embedded in a curable matrix precursor, and
- the at least one fiber is submitted to a force in at least one direction during curing of the matrix precursor,
said force being at least 1 N/mm² of the diameter of the at least one fiber.

The composite is thus manufactured by submitting the fiber(s) to a tension during curing a resin to form a matrix around and optionally between the fibers. The said at least one fiber may be submitted to said force also during the application of the matrix precursor, i.e. before the curing step.

The matrix precursor is applied to the fiber(s) in any known manner, such as by immersing the fiber(s) in a bath, by passing the fiber(s) through a nozzle where the matrix precursor is spread on the fiber(s) and possibly between them, when a bundle of fibers is used. The thus impregnated fiber may be then conducted though a throttler in order to ensure the positioning of the fibers. The pretensioning can be induced by attaching a weight to the fiber, or it can be induced by coiling the fiber around a roll. Any other method known *per se* can naturally also be used.

The curing can be carried out in two steps, wherein the first step is performed while the fiber is under tension and the second step is performed without the tension, for example in an oven. Curing, such as polymerisation, can be induced for example by chemical curing, infrared radiation, ultraviolet radiation, light radiation, microwave radiation, gamma rays radiation, laser radiation or heat.

The device for manufacturing a composite according to the present invention may comprise one or more curing units, where in case of several curing units they can be either identical or different.

The production speed can be for example 30 mm/min. Other possible production speeds can be from 5 to 60 mm/min, such as from 5, 10, 15, 20, 25, 30, 35, 40, 45, 50 or 55 mm/min up to 10, 15, 20, 25, 30, 35, 40, 45, 50, 55 or 60 mm/min.

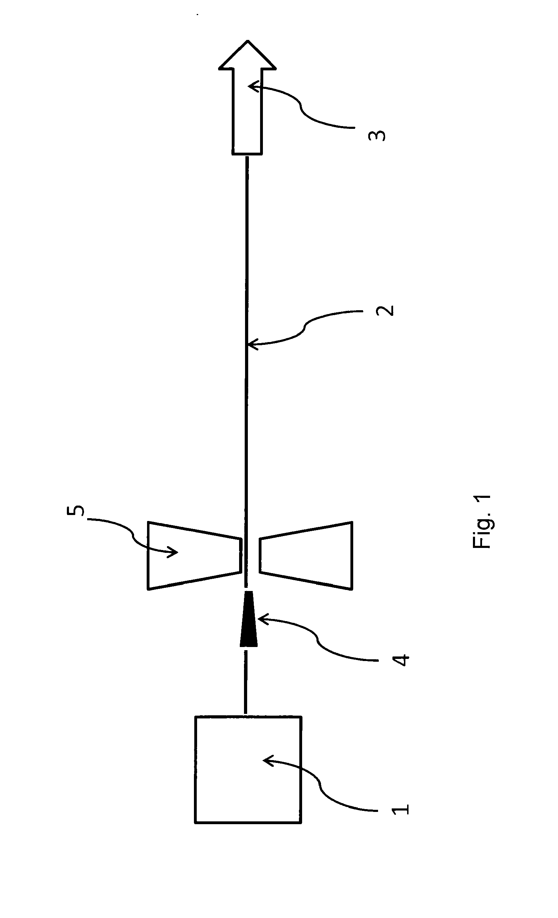

One example of a device for manufacturing the composite according to the present invention is shown in Figure 1 as will be explained below.

The present invention also relates to a composite obtainable by the method as described above.

The concept of the present invention can also be used in the manufacture of hybrid implants, i.e. implants combining different materials. The invention can for example be used for manufacturing screw threads: a fiber composite according to the present invention is wound around a pin made of for example titanium, thus forming the threads of a hybrid composite screw. Such a screw would have improved adhesion to the surrounding tissue if the thread-forming material was made for example from bioactive glass fibers and a suitable matrix.

The present invention further relates to the use of a composite according to any the present invention in dental or medical applications.

The fiber composite according to the present invention can thus be used for example for manufacturing a root canal post. Other possible uses in dental medicine are for example as implants, crowns, overlays, arches, brackets and as wire for orthodontic appliances.

The fiber composite can further be used in various medical application such as implants, pins, nails, fracture plates and bone marrow nails.

The composite according to the present invention can also be used for manufacturing a composite block, wherein several composites according to this invention are laminated together. A further advantage of this manufacturing method is that the fibers can be oriented in different directions. A block manufactured according to this invention could also comprise different fibers in different layers thus allowing complete tayloring of the properties of the final device. The block can then be used for manufacturing different appliances. One example is to manufacture a dental bridge by milling a block obtained as explained above.

The present invention yet further relates to a dental root canal post comprising a composite according to this invention. This kind of dental root canal post has all the advantages of known fiber reinforced composite posts with the addition of improved strenght properties, which are essential in this kind of application.

The present invention still relates to a fiber reinforced composite comprising
- at least one fiber selected from the group consisting of inert glass fibers, bioactive glass fibers, aramid fibers, poly(p-phenylene-2,6-benzobisoxazole) fibers, poly(2,6-diimidazo(4,5-b4',5'-e)pyridinylene-1,4(2,5-dihydro)phenylene fibers, polyethene fibers, polypropene fibers, sol-gel processed silica fibers, collagen, cellulose and modified cellulose fibers and mixtures thereof, and having a diameter of 1-30 µm and a lenght,
- a matrix embedding said at least one fiber and selected from the group consisting of a homo- or copolymer made of monomers selected from the group consisting of methyl methacrylate, ethyl methacrylate, n-butyl methacrylate, isobutyl methacrylate, 2-ethylhexyl methacrylate, cyclohexyl methacrylate, isobornyl methacrylate, tetrahydrofurfuryl methacrylate, benzyl methacrylate, morpholinoethyl methacrylate, diethylene glycol dimethacrylate, triethylene glycol dimethacrylate (TEGDMA), diurethane dimethacrylate, 2,2-bis(4-(2-hydroxy-3-methacryloxy)phenyl)propane (BisGMA), methacrylate functionalized dendrimers, other methacrylated hyperbranched oligomers and mixtures thereof, or selected from the group consisting of epoxy resins, rigid rod polymers such as poly(paraphenylene) based rigid rod polymers, ε-caprolactone, polycaprolactone, polylactides, polyhydroxyproline, and other biopolymers as well as polyamides, polyurethane, polyethylene, polypropylene, other polyolefins and polyvinyl chloride,
wherein the bending strength according to a modified standard ISO 10477 (ie. using a span of 50 mm and a loading speed of 5 mm/min) is at least 40 GPa.

According to an embodiment of the invention, the least one fiber is selected from the group consisting of inert glass fibers, bioactive glass fibers and mixtures thereof.

According to another embodiment of the invention, the matrix is selected from the group consisting of a homo- or copolymer made of monomers selected from the group consisting of methyl methacrylate, ethyl methacrylate, n-butyl methacrylate, isobutyl methacrylate, 2-ethylhexyl methacrylate, cyclohexyl methacrylate, isobornyl methacrylate, tetrahydrofurfuryl methacrylate, benzyl methacrylate, morpholinoethyl methacrylate, diethylene glycol dimethacrylate, triethylene glycol dimethacrylate (TEGDMA), diurethane dimethacrylate, 2,2-bis(4-(2-hydroxy-3-methacryloxy)phenyl)propane (BisGMA), methacrylate functionalized dendrimers, other methacrylated hyperbranched oligomers and mixtures thereof.

According to yet another embodiment, the fibers are E-glass fibers and the matrix is a mixture of 2,2-bis(4-(2-hydroxy-3-methacryloxy)phenyl)propane (BisGMA) and polymethylmethacrylate or a copolymer of 2,2-bis(4-(2-hydroxy-3-methacryloxy)phenyl)propane (BisGMA) and methylmethacrylate.

### DESCRIPTION OF THE DRAWING

Figure 1 schematically presents a method for manufacturing a pretensioned composite according to the present invention. In this method, the raw fiber 2 is fed from a device 1 in the direction 3 at a predetermined speed. The raw fiber is in this embodiment already impregnated with the matrix forming resin. The impregnated raw fiber is directed through a guiding device 4 to a curing device 5.

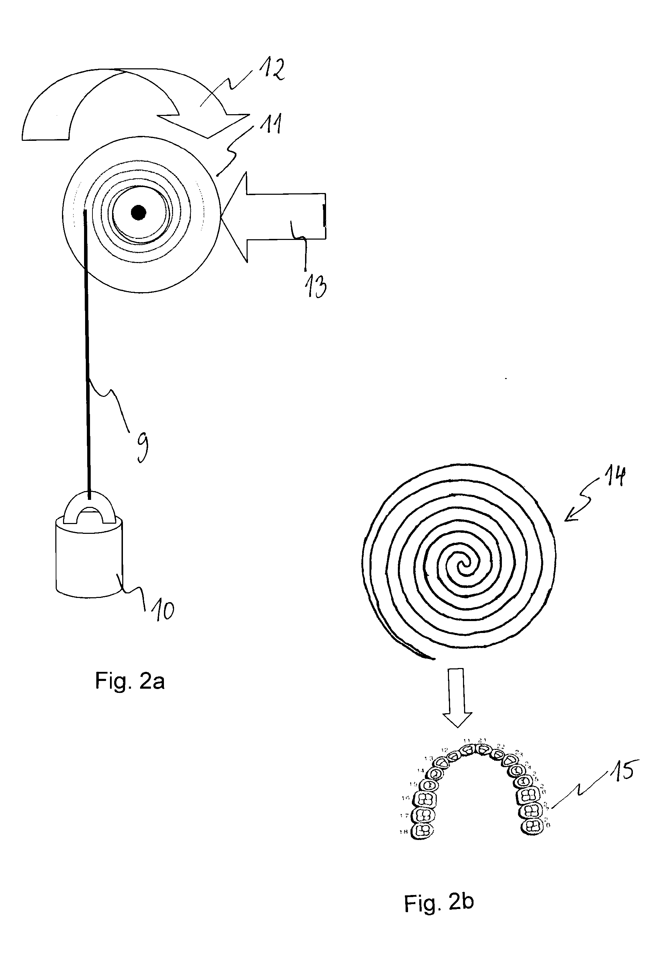

Figures 2a and 2b schematically present a manufacturing method for a round pretensioned fiber reinforced composite. The fibers 9 that are submitted to a force (here in the form of a weight 10) and embedded in a matrix precursor are formed as a circular block 11 by winding them in the direction of the arrow 12 on a support and cured to that shape with a curing device 13 (Figure 2a). The block 14 can then be used for example for making a fixed partial denture frame 15 for teeth arch shape, by grinding the finished block (Figure 2b). The resulting denture frame will then have improved strenght as the fibers are both essentially intact and submitted to a tension.

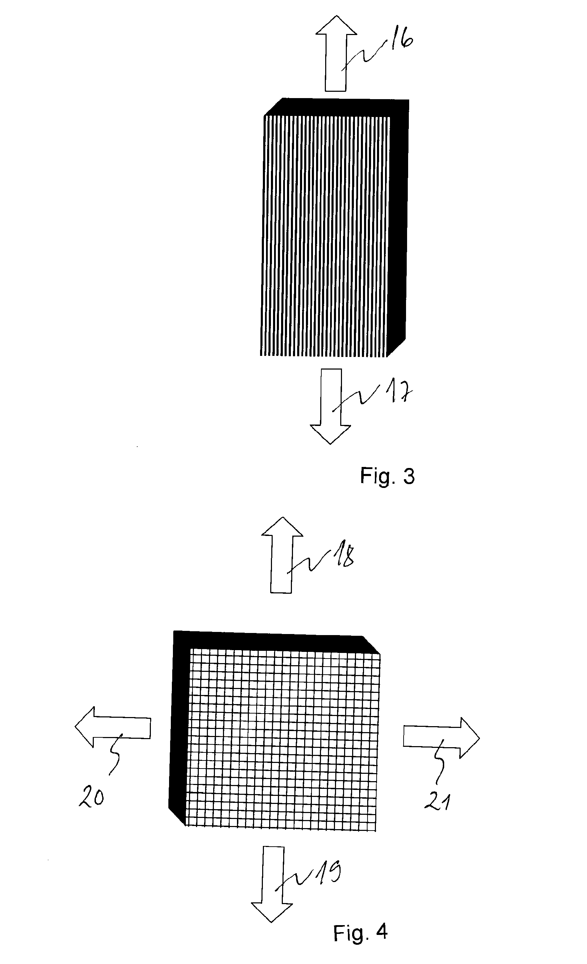

Figure 3 schematically presents a method for manufacturing a unidirectionally pretensioned composite according to the present invention. The block can be manufactured by laminating together several sheets manufactured according to the present invention, or it can be manufactured by curing a block comprising fibers in several layers, each layer comprising several fibers arranged next to each other, with the matrix precursor present also inbetween the layers and the fibers in each layer. The fiber are submitted to a tension in the direction of their length (16, 17).
Figure 4 schematically presents a method for manufacturing a bidirectionally pretensioned composite according to the present invention. In this embodiment, the fibers are in the form of a woven mat and are oriented in two directions (18, 19 and 20, 21). A force is applied in both directions of the fibers in order to obtain a composite having good strength properties in all its dimensions.

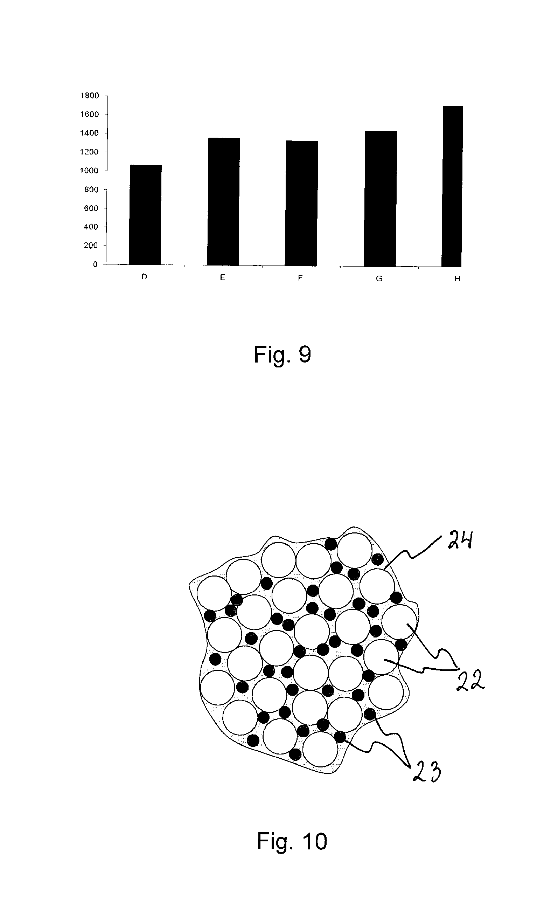

Figure 10 schematically presents an embodiment of the present invention. This embodiment consists of a hydrid fiber reinforced composite comprising high diameter E-glass fibers 24 combined with small diameter E-glass fibers 25 which essentially fit in the empty spaces between the high diameter fibers to achieve a maximum amount of fiber volume. A resin matrix 26 like bisGMA-TEGDMA may be used as resin matrix. A typical ratio between the high diameter and thelow diameter fiber is 0.15, meaning that the diameter of the small fibers 25 is less than approximately 15 % of the diameter of the high diameter fibers. The material may further comprise even smaller fibers. One example could be the combination of fibers with a diameter of 20 µm combined with fibers with a diameter of 3 µm, while the rowing density can be about 1:1 with high and low fiber volume.

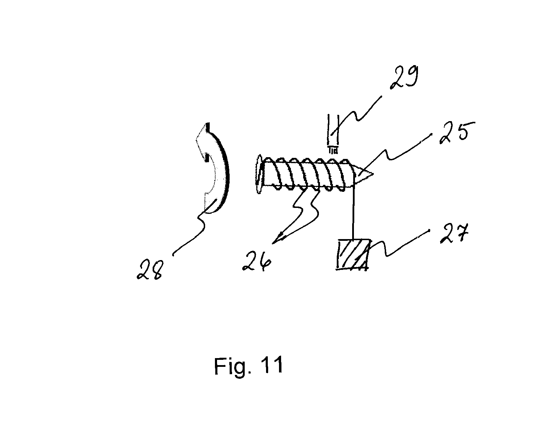

Figure 11 schematically presents another embodiment of the present invention. In this embodiment, a hybrid composite screw is manufactured: around a titanium pin 25 is wound a bundle of fibers 26 embedded in a matrix and submitted to a tension by a weight 27. The fibers are wound in such a manner so as to form the thread of the screw and cured by a light curing device 29. The arrow 28 shows the direction of winding of the titanium pin 25.

### EXPERIMENTAL PART

### Example 1

Two bundles of silanted E glass fiber from Ahlström Karhula (Finland) with a tex number of 4800 was used. The resin matrix consisted of a light-curing mixture of approximately 90 weight-% of bis-GMA (from Esschem, UK) and approximately 9 weight-% of PMMA (from Aldrich). As initiators, kamforkinone (from Aldrich) and 2-(dimethylamino)ethylmetacrylate (DMA, from Aldrich) were used.

Filler particles consisted of barium borosilicate, with a diameter of 0.4 µm (from Special Glass, USA).

The silaned E glass fiber was impregnated with the resin mixture and dried in vacuum for approximately 10 minutes. The dried fiber was then positioned through the guiding device (which also functioned as a throttler and had a diameter of approximately 2.8 mm) and tightened. A weight of 25 kg was attached to the other end of the fiber. The tensioned fiber was drawn slowly (at a speed of 30 mm/min) through the throttler to the light curing device. After light curing, the fiber was post cured with either infrared lamp for 30 min or in an oven (at 120°C for one hour). This composite is called composite B.

The same materials were used to manufacture a composite according to the prior art, i.e. without applying a force to the fiber during curing of the matrix precursor. This composite is called composite C.

Further, the same materials and conditions were used to prepare a third composite, called composite A, with the exception that filler particles, silanated barium silicate particles (for radio opacity) in an amount of about 10 weight-% of the whole impregnated fiber bundle were added to the composite.

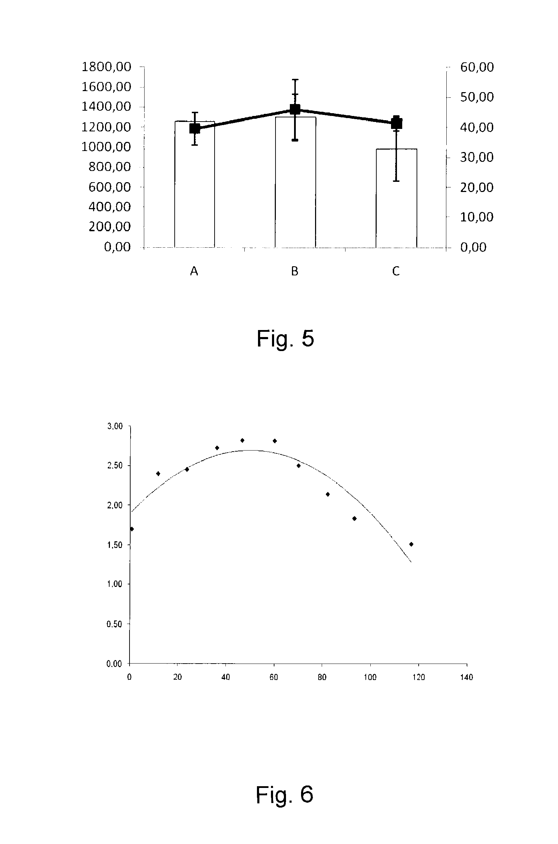

The three composites A, B and C were then tested for their bending strength according to a modification of the standard ISO 10477 (ie. using a span of 50 mm and a loading speed of 5 mm/min), the results of which are shown in Figure 5. The left ordinate and the columns shows the maximum bending stress at maximum load, in MPa. The right ordinate and the line show the Young's modulus of bending, in GPa. As can be seen from the results, the composite B according to the invention has approximately 25 % higher maximum bending stress as maximum load when compared to the composite C according to the prior art. The addition of filler particles (composite A) does not have any significant influence on the bending strength. Filler particles can thus be used for introducing new properties to the material.

### Example 2

A continuous unidirectional E-glass fiber rowing (approximately 4000 fibers with fiber diameter of 17 µm) was impregnated with bisGMA-TEGDMA (50 %-50 %) comonomer resin system. The Bis-GMA/TEGDMA resin was composed of 50 wt%

Bis-GMA (bisphenol-A-glycidyl dimethacrylate; Esschem Europe Ltd, Seaham, UK), 50 wt% TEGDMA (95 % triethylene glycol dimethacrylate; Sigma-Aldrich, Helsinki, Finland), 0,7 wt% CQ (97% camphorquinone; Sigma-Aldrich, Helsinki, Finland) as a light polymerisation initiator and 0,7 wt% DMAEMA (98% 2-(dimethylamino)ethyl methacrylate; Sigma-Aldrich, Helsinki, Finland) as a co-initiator.The E-glass rowing impregnated with resin was pre-tensioned and pulled through a nozzle (having a diameter of 1.4 mm) in order to assemble the fibres and remove the excess resin. Subsequently, the prepregs were light cured for 30 seconds with a dental polymerisation unit while the pre-tension remained applied.

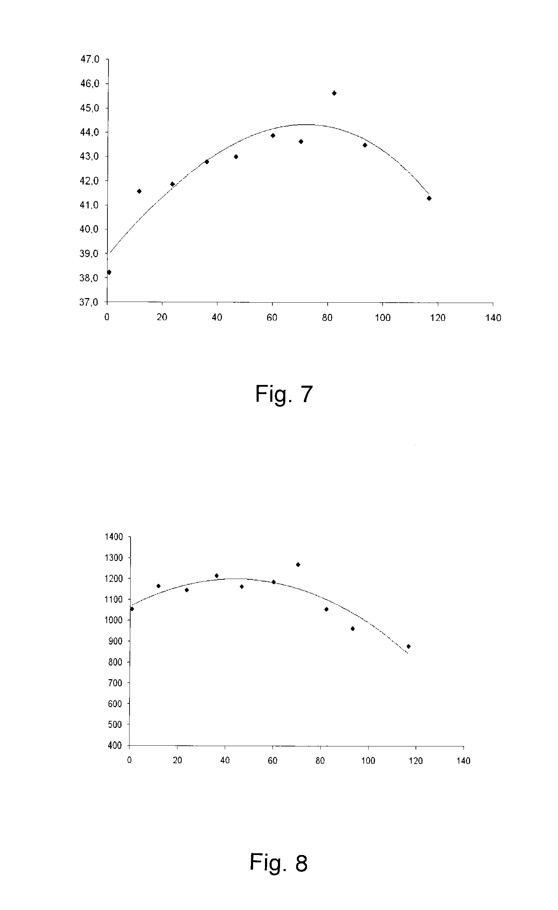

These pretensioned rods were cut to a lenght of 25 mm and tested with three point bending according to the standard ISO 10477 (span 20, loading speed 1 mm/min). The results of this mechanical test are shown in Figures 6-8 as follows, the abscissa showing the applied pretension during manufacture in MPa: toughness in Figure 6 (in MPa), flexural modulus in Figure 7 (in GPa) and flexural strength in Figure 8 (in MPa). In Figure 8, the upper curve corresponds to the flexural strength and the lower curve to the initial failure, both in MPa.

There results show increased mechanical properties of the pretensioned fiber reinforced composite according to the present invention when compared to the control non pretensioned fiber reinforced composite (at value 0 on the absicssa). Furthermore, notable optimum pretension was noted to be approximately 40-70 MPa Pre-tension levels exceeding this optimal level for this combination of fibers and matrix resulted in a significant decrease in mechanical properties, even below those of non-pre-tensioned composites.

### Example 3

Fiber reinforced composite rods were fabricated according to Example 2 except that different polymerisation methods and pre-tension protocols were evaluated.

At groups D and E, non-pretensioned fiber reinforced composite rods were fabricated with two polymerization method: for group D, only light curing was applied and for group E, light curing was combined with heat curing at 120 °C for one hour revealing that the post curing increased the mechanical properties of the fiber reinforced composite. This is indeed shown in Figure 9 where the ordinate shows the flexural strength in MPa, measured as in Example 2.

Furthermore, the composte rods of groups F, G and H were, during manufacture, pretensioned with a 6 kg load (equalling to a force of 70 MPa) and revealed higher mechanical properties than the non pretensioned fiber reinforced composite rod. In group F, only light curing was used whereas for group G, the composite was additionaly cured in an oven.

However, the composite of group H was manufactured in such a manner that the applied pretension remained also during the heat curing. This lead to the best mechanical properties as seen from Figure 9.

## Claims

1. A fiber reinforced composite comprising
- at least one fiber having a lenght and a diameter, said fiber being different from carbon fiber, and
- a matrix embedding said at least one fiber and obtainable by curing a matrix precursor,
the composite being obtainable by a method wherein the at least one fiber is submitted to a force in at least one direction during curing of said matrix precursor, said force being at least 1 N/mm² of the diameter of the at least one fiber.

2. A composite according to claim 1, **characterised in that** said force is applied in the direction of the lenght of the fiber.

3. A composite according to any of the preceding claims, **characterised in that** it comprises a bundle of fibers.

4. A composite according to claim 3, **characterised in that** said bundle of fibers is wound around an axis.

5. A composite according to claim 4, **characterised in that** said force is applied in the direction of wounding.

6. A composite according to any of the preceding claims, **characterised in that** said force is at least 10 N/mm² of the diameter of the at least one fiber.

7. A composite according to any of the preceding claims, **characterised in that** it comprises 2-65 volume-% of fibers.

8. A composite according to any of the preceding claims, **characterised in that** it comprises 20-98 volume-% of matrix.

9. A composite according to any of the preceding claims, **characterised in that** it further comprises filler particles.

10. A composite according to claim 9, **characterised in that** it comprises 5-80 volume-% of filler particles.

11. A method for manufacturing a fiber reinforced composite, said composite comprising at least one fiber having a lenght and a diameter, provided that the fiber is different from carbon fiber, wherein
- the at least one fiber is embedded in a curable matrix precursor, and
- the at least one fiber is submitted to a force in at least one direction during curing of the matrix precursor,
said force being at least 1 N/mm² of the diameter of the at least one fiber.

12. A method according to claim 11, **characterised in that** said at least one fiber is submitted to said force also during the application of the matrix precursor.

13. A composite obtainable by the method of any of the claims 11-12.

14. Use of a composite according to any of the claims 1-9 or 13 in dental or medical applications.

15. A dental root canal post comprising a composite according to any of the claims 11-9 or 13.
